# EUROPÄISCHE PATENTSCHRIFT

(11) **EP 4 058 233 B1**
(45) Veröffentlichungstag und Bekanntmachung des Hinweises auf die Patenterteilung: **21.01.2026**
(21) Anmeldenummer: 20797702.6
(22) Anmeldetag: 23.10.2020
(51) Int. Cl.: B23K 26/06, B23K 26/067, B23K 26/53

(54) **VERFAHREN ZUR LASERBEARBEITUNG EINES WERKSTÜCKS, BEARBEITUNGSOPTIK UND LASERBEARBEITUNGSVORRICHTUNG**
METHOD FOR LASER PROCESSING A WORKPIECE, OPTICAL PROCESSING SYSTEM, AND LASER PROCESSING DEVICE
PROCÉDÉ DE TRAITEMENT LASER D'UNE PIÈCE À USINER, SYSTÈME DE TRAITEMENT OPTIQUE ET DISPOSITIF DE TRAITEMENT LASER

(30) Priorität: 14.11.2019 DE 102019217577
(43) Veröffentlichungstag der Anmeldung: 21.09.2022
(73) Patentinhaber: TRUMPF Laser- und Systemtechnik SE, 71254 Ditzingen (DE)
(72) Erfinder: FLAMM, Daniel, 71640 Ludwigsburg (DE); KUMKAR, Malte, 99425 Weimar (DE)
(74) Vertreter: Trumpf Patentabteilung
(86) Internationale Anmeldenummer: PCT/EP2020/079873
(87) Internationale Veröffentlichungsnummer: WO 2021/094072

(56) Entgegenhaltungen:
- EP-A1- 2 913 137
- WO-A1-2019/197423
- DE-A1- 102017 203 671
- US-A1- 2019 221 985

## Beschreibung

Die vorliegende Erfindung betrifft ein Verfahren zum Laserbearbeiten eines Werkstücks, eine Bearbeitungsoptik zum Laserbearbeiten eines Werkstücks, sowie eine Laserbearbeitungsvorrichtung mit einer solchen Bearbeitungsoptik und mit einer Laserquelle, bevorzugt mit einer Ultrakurzpuls-Laserquelle.

Bei der Laserbearbeitung eines Werkstücks, insbesondere beim Laserabtragen, Laserschneiden, Oberflächenstrukturieren, Laserschweißen, Laserbohren, etc. ist es günstig, einen Eingangslaserstrahl in mehrere Teilstrahlen aufzuteilen, die an unterschiedlichen Orten auf das Werkstück auftreffen bzw. fokussiert werden. Die Aufteilung kann an einem Polarisator-Element erfolgen, wobei aus einem Eingangslaserstrahl typischerweise zwei Teilstrahlen mit jeweils einem von zwei unterschiedlichen Polarisationszuständen, z.B. zwei senkrecht zueinander polarisierte Teilstrahlen, als Ausgangslaserstrahlen gebildet werden. Es ist möglich, dass mehrere Eingangslaserstrahlen, die räumlich versetzt sind, auf das Polarisator-Element auftreffen. Jeder der Eingangslaserstahlen wird in diesem Fall in ein Paar von Teilstrahlen mit jeweils einem von zwei unterschiedlichen Polarisationszuständen aufgeteilt.

In der WO2015/128833A1 ist ein Laser-Schneidkopf beschrieben, der ein im Strahlengang eines Laserstrahls angeordnetes polarisierendes Strahlversatzelement zur Erzeugung zweier linear polarisierter Teilstrahlen aufweist. Das polarisierende Strahlversatzelement ist in einem divergenten oder in einem konvergenten Strahlengang-Abschnitt des Laserstrahls angeordnet. Das Strahlversatzelement kann aus einem doppelbrechenden Material gebildet sein. Bei der Verwendung einer fokussierenden, vergrößernden Optik und einem im Strahlengang hinter der fokussierenden Optik angeordneten Strahlversatzelement kann es zu einer teilweisen Überlagerung der beiden Teilstrahlen in der Fokusebene kommen.

Aus der WO2015/5114032 A1 ist eine Laserbearbeitungsvorrichtung zur Werkstückbearbeitung bekannt geworden, die eine Bearbeitungsoptik aufweist, bei der ein Eingangslaserstrahl an einem Polarisator in zwei senkrecht polarisierte Teilstrahlen aufgeteilt wird. Die Bearbeitungsoptik weist eine größere Weglänge für den zweiten Teilstrahl als für den ersten Teilstrahl auf, wodurch der zweite Teilstrahl eine längere Laufzeit als der erste Teilstrahl aufweist. Der zweite Teilstrahl wird in mindestens einer geometrischen Strahleigenschaft gegenüber dem ersten Teilstrahl verändert. Der veränderte zweite Teilstrahl wird dem ersten Teilstrahl derart überlagert, dass beide Teilstrahlen einen gemeinsamen Ausgangslaserstrahl bilden. In der WO2018/020145A1 ist ein Verfahren zum Schneiden von dielektrischem oder Halbleiter-Material mittels eines gepulsten Lasers beschrieben, bei dem ein Laserstrahl in zwei Teilstrahlen aufgeteilt wird, die in zwei räumlich getrennten, um einen Abstand zueinander versetzten Zonen auf das Material treffen. Der Abstand wird auf einen Wert unterhalb eines Schwellwerts eingestellt, um einen geradlinigen Mikro-Bruch in dem Material zu erzeugen, der in einer vorgegebenen Richtung zwischen den beiden zueinander versetzten Zonen verläuft. An den beiden Teilstrahlen kann eine Strahlformung zur Erzeugung einer Ortsverteilung auf dem Material in Form eines Bessel-Strahls durchgeführt werden.

Die WO2016/089799A1 beschreibt ein System zum Laserschneiden mindestens eines Glas-Artikels mittels einer gepulsten Laser-Baugruppe, die ein strahlformendes optisches Element zur Umwandlung eines Eingangsstrahls in einen quasi-nichtbeugenden Strahl, beispielsweise einen Bessel-Strahl, umfasst. Die Laser-Baugruppe umfasst auch ein Strahl-Transformations-Element zur Umwandlung des quasi-nichtbeugenden Strahls in mehrere zwischen 1 µm und 500 µm voneinander beabstandete Teilstrahlen.

In der DE 10 2019 205 394.7 ist eine Bearbeitungsoptik zur Werkstückbearbeitung beschrieben, die ein doppelbrechendes Polarisator-Element zur Aufteilung mindestens eines Eingangslaserstrahls in ein Paar von senkrecht zueinander polarisierten Teilstrahlen sowie eine im Strahlengang nach dem Polarisator-Element angeordnete Fokussieroptik zur Fokussierung der Teilstrahlen auf Fokuszonen aufweist, wobei die Bearbeitungsoptik zur Erzeugung von zumindest teilweise überlappenden Fokuszonen der senkrecht zueinander polarisierten Teilstrahlen ausgebildet ist. Die Bearbeitungsoptik kann zur Erzeugung einer Mehrzahl von Paaren von zumindest teilweise überlappenden Fokuszonen entlang einer vorgegebenen Kontur in einer Fokusebene ausgebildet sein, wobei sich Fokuszonen von jeweils zwei senkrecht zueinander polarisierten Teilstrahlen von unmittelbar benachbarten Paaren zumindest teilweise überlappen. In der WO 2019/197423 A1 ist ein Verfahren nach dem Oberbegriff des Anspruchs 1 und eine Bearbeitungsoptik nach dem Oberbegriff des Anspruchs 12 beschrieben.

### Aufgabe der Erfindung

Der Erfindung liegt die Aufgabe zugrunde, ein Verfahren zum Laserbearbeiten, eine Bearbeitungsoptik und eine Laserbearbeitungsvorrichtung mit einer solchen Bearbeitungsoptik bereitzustellen, die eine dreidimensionale Werkstückbearbeitung, insbesondere die Bearbeitung von Oberflächen bzw. von Kanten des Werkstücks, ermöglichen.

### Gegenstand der Erfindung

Diese Aufgabe wird erfindungsgemäß durch ein Verfahren gemäß Anspruch 1 gelöst. Der Laserstrahl kann beispielsweise in einem Festkörperlaser, insbesondere in einem Scheiben-Laser oder in einem Faser-Laser, erzeugt werden.

Im Sinne dieser Anmeldung werden unter Teilstrahlen mit unterschiedlichen Polarisationszuständen linear polarisierte Teilstrahlen verstanden, deren Polarisationsrichtungen und einem Winkel von 90° zueinander ausgerichtet sind. Unter Teilstrahlen mit unterschiedlichen Polarisationszuständen werden aber auch zirkular polarisierte Teilstrahlen mit entgegengesetztem Drehsinn verstanden, d.h. zwei links bzw. rechts zirkular polarisierte Teilstrahlen. Die Umwandlung von linear polarisierten Teilstrahlen mit senkrecht zueinander ausgerichteten Polarisationsrichtungen in zirkular polarisierte Teilstrahlen mit entgegengesetztem Drehsinn kann z.B. mit Hilfe einer geeignet orientierten Verzögerungsplatte (λ/4-Platte) erfolgen.

Wird ein (gepulster) Laserstrahl, der z.B. von einem Single-Mode Laser erzeugt wird und ein Gauß-förmiges Strahlprofil aufweist, in zwei oder mehr Teilstrahlen aufgeteilt und die Teilstrahlen werden zumindest teilweise überlagert, kann dies zu unerwünschten Interferenz-Effekten führen, wenn die Teilstrahlen die gleiche oder eine ähnliche Polarisation aufweisen. Daher können bei der Fokussierung der Teilstrahlen die Fokuszonen bzw. die Fokusquerschnitte nicht beliebig nahe beieinander liegen, so dass die Teilstrahlen in der Regel an voneinander beabstandeten Fokuszonen bzw. Teilbereichen auf dem Werkstück fokussiert werden.

Bei der Fokussierung von Teilstrahlen mit jeweils unterschiedlichen Polarisationszuständen auf unmittelbar benachbarte Teilbereiche bzw. Fokuszonen kommt es bei der (teilweisen) Überlagerung nicht zu Interferenz-Effekten der Laserstrahlung aus unterschiedlichen Orts- oder Winkelbereichen, sofern der Polarisationszustand der jeweiligen Teilstrahlen einheitlich über den gesamten relevanten Strahlquerschnitt bzw. die jeweilige Fokuszone ist. Die Polarisation eines jeweiligen Teilstrahls sollte daher ortsabhängig über den Strahlquerschnitt bzw. über die Fokuszone/ den Teilbereich möglichst wenig variieren. In diesem Fall können die benachbarten Fokuszonen beliebig nahe aneinander liegen, sich teilweise oder ggf. vollständig überlappen und sogar homogene Fokuszonen ausbilden, und zwar sowohl transversal, d.h. senkrecht zur Ausbreitungsrichtung der Teilstrahlen, als auch longitudinal, d.h. in Ausbreitungsrichtung der Teilstrahlen.

Die Teilbereiche sind typischerweise entlang des zusammenhängenden Wechselwirkungsbereichs aufgereiht, d.h. jeder Teilbereich (mit Ausnahme der Teilbereiche an den beiden Enden des Wechselwirkungsbereichs) grenzt an genau zwei benachbarte Teilbereiche an und überlappt teilweise mit diesen beiden benachbarten Teilbereichen. Bei dem zusammenhängenden Wechselwirkungsbereich überlappen sich die benachbarten Teilbereiche somit typischerweise nur so weit, dass diese nicht mit dem jeweils anders polarisierten Teilstrahl eines weiteren angrenzenden Teilbereichs überlappen, so dass keine Überlagerung von identisch polarisierten Teilstrahlen auftritt. Der zusammenhängende Wechselwirkungsbereich bildet eine vorgegebene, zusammenhängende Kontur, die auch als (gekrümmte) Multispot-Fokuskontur bzw. im Falle einer geradlinigen Kontur als Multispot-Fokusline bezeichnet wird.

Alternativ zur Nutzung von ganz oder teilweise überlappenden Teilstrahlen, die unterschiedliche Polarisationszustände aufweisen, können auch ganz oder teilweise überlappende Teilstrahlen genutzt werden, die einen Zeitversatz aufweisen, der so groß ist, dass praktisch keine Interferenz-Effekte auftreten. Dies ist typischerweise der Fall, wenn der Zeitversatz mindestens der Größenordnung der Pulsdauer oder der Größenordnung der Kohärenzlänge entspricht. Minimal wird hierbei in der Regel 50% des jeweils kleineren der beiden Werte (Pulsdauer bzw. Kohärenzlänge) als Zeitversatz gewählt.

Das Aufteilen des Laserstrahls auf die Mehrzahl von Teilstrahlen, die jeweils einen von zwei unterschiedlichen Polarisationszuständen aufweisen, erfolgt typischerweise in einer Bearbeitungsoptik.

Bei einer Variante durchläuft der Laserstrahl beim Aufteilen auf die Mehrzahl von Teilstrahlen eine bevorzugt diffraktive Strahlteiler-Optik und mindestens ein bevorzugt doppelbrechendes Polarisator-Element. Durch die (z.B. diffraktive) Strahlteiler-Optik kann der Laserstrahl auf eine Mehrzahl von Teilstrahlen aufgeteilt werden, um eine Strahlteilung auf mehrere Teilbereiche bzw. Fokuszonen (Spots) im Arbeitsvolumen des (bevorzugt transparenten) Materials des Werkstücks zu bewirken. Die Fokuszonen, die ohne Verwendung der Polarisator-Optik bzw. des Polarisator-Elements in dem Arbeitsvolumen erzeugt werden, sind voneinander beabstandet, um die weiter oben beschriebenen Interferenzeffekte zu vermeiden. Die Polarisator-Optik bzw. das Polarisator-Element dient dazu, einen jeweiligen Eingangslaserstrahl, der von der Strahlteiler-Optik erzeugt wird, in zwei Teilstrahlen mit jeweils unterschiedlichen Polarisationszuständen aufzuteilen, um auf diese Weise die Lücken zwischen den Fokuszonen aufzufüllen und einen zusammenhängenden Wechselwirkungsbereich zu erzeugen. Entlang des zusammenhängenden Wechselwirkungsbereichs entsteht somit eine Strahlform bzw. eine Intensitätsverteilung, die in der Regel einen kontinuierlichen Übergang, d.h. keine Nullstellen in der Intensitätsverteilung zwischen den Teilstrahlen bzw. zwischen den Fokuszonen/Teilbereichen, aufweist.

Es versteht sich, dass der Laserstrahl anders als oben beschrieben zunächst das bzw. die Polarisator-Element(e) durchlaufen kann und erst danach das Strahlteiler-Element bzw. die Strahlteiler-Optik. Die Strahlteiler-Optik kann beispielsweise in Form eines diffraktiven optischen Elements ausgebildet sein, es kann sich aber auch um eine andere Art von Strahlteiler-Optik handeln, beispielsweise um eine geometrische Strahlteiler-Optik.

Auch wenn in der nachfolgenden Beschreibung häufig nur von einem doppelbrechenden Polarisator-Element die Rede ist, können grundsätzlich auch zwei oder mehr (doppelbrechende) Polarisator-Elemente in der Bearbeitungsoptik vorgesehen sein. Beispielsweise kann in diesem Fall der von einer (Ultrakurzpuls)Laserquelle erzeugte, in die Bearbeitungsoptik eintretende Laserstrahl in zwei oder mehr Teilstrahlen aufgeteilt werden, die jeweils einen Eingangslaserstrahl für ein zugehöriges doppelbrechendes Polarisator-Element darstellen, oder es können ggf. die Laserstrahlen mehrerer Laserquellen als Eingangslaserstrahlen verwendet werden.

Bei einer Variante wird beim Aufteilen des Laserstrahls auf die Mehrzahl von Teilstrahlen an einem doppelbrechenden Polarisator-Element ein lateraler Versatz (Ortsversatz) und/oder ein Winkelversatz zwischen zwei Teilstrahlen erzeugt, die auf benachbarte Teilbereiche des zusammenhängenden Wechselwirkungsbereichs fokussiert werden. In diesem Fall kann das das doppelbrechende Polarisator-Element entweder zur Erzeugung eines lateralen (Orts-)Versatzes oder zur Erzeugung eines Winkelversatzes oder zur Erzeugung einer Kombination eines Winkelversatzes und eines Ortsversatzes zwischen den zwei senkrecht zueinander polarisierten Teilstrahlen ausgebildet sein.

Mit Hilfe eines doppelbrechenden Polarisator-Elements, typischerweise in Form eines doppelbrechenden Kristalls, wird bei geeigneter Polarisation des Eingangslaserstrahls, z.B. bei einem unpolarisierten Eingangslaserstrahl bzw. bei einem Eingangslaserstrahl mit undefinierter oder zirkularer Polarisation, das gezielte räumliche Aufteilen des Eingangslaserstrahls in seine Polarisationsbestandteile ermöglicht. Abhängig von der Ausgestaltung des doppelbrechenden Polarisator-Elements kann ein wohldefinierter, reiner Ortsversatz, ein wohldefinierter, reiner Winkelversatz oder eine Kombination aus Ortsversatz und Winkelversatz zwischen den beiden Teilstrahlen mit den unterschiedlichen Polarisationszuständen erzeugt werden.

Zur Erzeugung des Ortsversatzes (ohne Winkelversatz) kann das doppelbrechende Polarisator-Element beispielsweise parallel ausgerichtete, in der Regel plane Strahleintritts- und Strahlaustrittsflächen aufweisen. Die optische Achse des doppelbrechenden Kristalls ist in diesem Fall typischerweise unter einem Winkel zur Strahleintrittsfläche ausgerichtet. Trifft der Eingangslaserstrahl senkrecht auf die Strahleintrittsfläche, wird an der Strahlaustrittsfläche ein reiner Ortsversatz erzeugt.

Zur Erzeugung des Winkelversatzes (ohne Ortsversatz) kann das doppelbrechende Polarisator-Element eine Strahlaustrittsfläche aufweisen, die unter einem Winkel zur Strahleintrittsfläche geneigt ist. Die optische Achse des doppelbrechenden Kristalls ist in diesem Fall typischerweise parallel zur Strahleintrittsfläche ausgerichtet. Die beiden Teilstrahlen treten in diesem Fall an der Strahlaustrittsfläche an demselben Ort und mit einem definierten Winkelversatz aus dem doppelbrechenden Kristall aus. Zur Erzeugung einer Kombination aus Orts- und Winkelversatz kann beispielsweise ein Polarisator-Element in Form eines herkömmlichen Prismen-Polarisators verwendet werden, beispielsweise ein Nicolsches Prisma, ein Rochon-Prisma, ein Glan-Thompson-Prisma oder eine andere Art von Prismen-Polarisator (vgl. z.B. "https://de.wikipedia.org/wiki/Polarisator" oder "https://www.b-halle.de/produkte/Polarisatoren.html").

Erfindungsgemäß wird beim Aufteilen des Laserstrahls auf die Mehrzahl von Teilstrahlen an einem doppelbrechenden Polarisator-Element, insbesondere an einem doppelbrechenden Linsen-Element, ein longitudinaler Versatz zwischen zwei Teilstrahlen erzeugt, die bevorzugt auf benachbarte Teilbereiche des zusammenhängenden Wechselwirkungsbereichs fokussiert werden. Für die Erzeugung des longitudinalen Versatzes zwischen den Teilstrahlen kann z.B. ein doppelbrechendes abbildendes optisches Element, insbesondere ein Linsen-Element, verwendet werden. Das doppelbrechende Linsen-Element kann fokussierend (z.B. als Sammellinse) oder strahlaufweitend (z.B. als Zerstreuungslinse) ausgebildet sein. Im ersten Fall kann das Linsen-Element eine Fokussieroptik der Bearbeitungsoptik bilden. Es hat sich jedoch als günstig erwiesen, wenn als Fokussieroptik ein nicht doppelbrechendes Linsen-Element (Fokussierlinse) verwendet wird. Für den Fall, dass das doppelbrechende Linsen-Element eine fokussierende Wirkung hat, kann dieses einen Teil der Fokussieroptik bilden. In der vorliegenden Anmeldung wird als Fokussieroptik häufig das optische Element bezeichnet, welches die größte Brechkraft aufweist und welches typischerweise in Form einer Fokussierlinse (Objektivlinse) ausgebildet ist.

Die Anordnung des bzw. der doppelbrechenden Polarisator-Element(e) im Strahlengang der Bearbeitungsoptik hängt neben der Art der Laserbearbeitung davon ab, ob ein lateraler oder longitudinaler Ortsversatz und/oder ein Winkelversatz erzeugt werden soll. Für Beispiele der Anordnung von doppelbrechenden Polarisator-Elementen in einer Bearbeitungsoptik sei auf die eingangs zitierte DE 10 2019 205 394.7 verwiesen, die in ihrer Gesamtheit durch Bezugnahme zum Inhalt dieser Anmeldung gemacht wird. Es versteht sich, dass durch eine geeignete Auswahl von doppelbrechenden Polarisator-Elementen sowohl ein longitudinaler als auch ein lateraler Versatz der Fokuszonen bzw. der Teilbereiche des zusammenhängenden Wechselwirkungsbereichs erzeugt werden kann.

Die Teilbereiche bzw. die Fokuszonen des zusammenhängenden Wechselwirkungsbereichs können in einer gemeinsamen Ebene liegen, die typischerweise der Fokusebene der Bearbeitungsoptik entspricht.

Bevorzugt sind zumindest zwei der Teilbereiche des zusammenhängenden Wechselwirkungsbereichs in longitudinaler Richtung (z.B. Z-Richtung) versetzt, d.h. diese liegen nicht in einer gemeinsamen Fokusebene. Bei dieser Variante weicht der zusammenhängende Wechselwirkungsbereich typischerweise von einer linearen Form ab, d.h. der Wechselwirkungsbereich bildet eine in der Regel gekrümmte Kontur, die sich in longitudinaler Richtung erstreckt. Durch das Realisieren eines zusätzlichen Versatzes der Teilbereiche in lateraler Richtung (z.B. X-Richtung) kann der zusammenhängende Wechselwirkungsbereich eine praktisch beliebige Geometrie bzw. Konturlinie in der X-Z-Ebene bilden. Es ist grundsätzlich auch möglich, einen lateralen Versatz der Teilstrahlen in zwei Richtungen zu erzeugen (z.B. in X-Richtung und in Y-Richtung), d.h. der zusammenhängende Wechselwirkungsbereich muss nicht zwingend in einer Ebene liegen.

Bei einer weiteren Variante werden bei der Laserbearbeitung der zusammenhängende Wechselwirkungsbereich und das Werkstück relativ zueinander bewegt, wobei die Bewegung bevorzugt entlang einer Vorschubrichtung erfolgt. Durch die Relativbewegung wird der Wechselwirkungsbereich entlang eines Bearbeitungspfads bewegt, in dem z.B. Material des Werkstücks abgetragen oder das Material des Werkstücks strukturell modifiziert werden kann. Die Vorschubrichtung während der Laserbearbeitung kann konstant gewählt werden, es ist aber auch möglich, dass die Vorschubrichtung während der Laserbearbeitung variiert. Im einfachsten Fall erfolgt ein geradliniger Vorschub des Werkstücks und des Wechselwirkungsbereichs relativ zueinander in einer Richtung, die quer, insbesondere senkrecht, zu der Ebene (z.B. der X-Z-Ebene) verläuft, in welcher der Wechselwirkungsbereich liegt.

Beim Laserbearbeiten bzw. bei der Werkstückbearbeitung kann es sich beispielweise um Laserabtragen, Laserschneiden, Oberflächenstrukturieren, Laserschweißen, Laserbohren, ... handeln. Es versteht sich, dass abhängig von der Art der Laserbearbeitung die Relativ-Bewegung mehrmals wiederholt werden kann, z.B. um beim Laserabtragen nacheinander mehrere Schichten des Werkstück-Materials abzutragen.

Bei einer Variante bildet der Wechselwirkungsbereich einen Ablationsbereich zum Abtragen von Material des Werkstücks. In diesem Fall kann eine Bearbeitung des Werkstücks erfolgen, bei dem das Material des Werkstücks beispielsweise schichtweise abgetragen wird. Der zusammenhängende Wechselwirkungsbereich kann in diesem Fall linienförmig sein und in einer Fokusebene verlaufen. Durch eine Bewegung des linienförmigen Wechselwirkungsbereichs und des Werkstücks relativ zueinander entlang der Vorschubrichtung kann eine jeweilige Schicht des Werkstücks abgetragen werden. Es ist auch möglich, einen Wechselwirkungsbereich zu erzeugen, der eine an die abzutragende Kontur angepasste Geometrie bzw. Profil aufweist, beispielsweise ein V-förmiges oder ein U-förmiges Profil, um eine V-förmige oder eine U-förmige Nut in dem Werkstück zu erzeugen. Ein Wechselwirkungsbereich mit einem solchen angepassten Profil kann in mehreren aufeinander folgenden Ablations-Schritten immer tiefer in das Volumen des Werkstücks abgesenkt werden, um die V-förmige oder U-förmige Nut zu erzeugen und ggf. das Werkstück in zwei Segmente zu trennen. Das Profil des Wechselwirkungsbereichs kann ggf. während der Laserbearbeitung verändert werden. Insbesondere kann bei aufeinander folgenden Ablations-Schritten, bei denen jeweils Material abgetragen wird, nach und nach ein steileres Profil des Wechselwirkungsbereichs gewählt werden, d.h. die Erstreckung des Profils in longitudinaler Richtung nimmt zu. Beispielsweise kann in diesem Fall ein V-förmiges Profil in aufeinander folgenden Ablations-Schritten nach und nach immer steiler gewählt werden, um eine V-förmige Nut in dem Werkstück zu erzeugen.

Bei einer weiteren Variante wird der Ablationsbereich an einer eintrittsseitigen Oberfläche des Werkstücks oder an einer austrittsseitigen Oberfläche des Werkstücks gebildet, wobei beim Laserbearbeiten bevorzugt eine vorgegebene, insbesondere dreidimensionale Flächenform an der eintrittsseitigen oder an der austrittsseitigen Oberfläche erzeugt wird. Bei dieser Variante wird durch die Laserbearbeitung eine Modifikation einer Flächenform bzw. Geometrie der Oberfläche vorgenommen, um diese an eine vorgegebene Flächenform anzupassen, z.B. um eine keilförmige, eine zylindrische oder eine Freiform-Oberfläche zu bilden. Zu diesem Zweck wird das Profil bzw. die Geometrie des Wechselwirkungsbereichs an die vorgegebene Flächenform, genauer gesagt an ein Querschnittsprofil der vorgegebenen Flächenform, angepasst und der Wechselwirkungsbereich wird entlang des Bearbeitungspfads relativ zum Werkstück bewegt, um an der Oberfläche die vorgegebene Flächenform zu erzeugen. Auf diese Weise können Oberflächen mit nahezu beliebigen Formen erzeugt werden. Nach dem Laserbearbeiten kann eine modifizierende Nachbearbeitung der Oberfläche erfolgen, beispielsweise kann die Oberfläche poliert werden.

Für den Fall, dass der Ablationsbereich an der austrittsseitigen Oberfläche des Werkstücks gebildet ist, ist das Werkstück für die Wellenlänge des Laserstrahls transparent. Beim rückseitigen abtragenden Laserbearbeiten ist es vorteilhaft, dass die Abtrags-Produkte, anders als bei eintrittsseitiger Bearbeitung, die Strahlpropagation bis zur Bearbeitungszone nicht beeinflussen. Bei einem transparenten Werkstück können die eintrittsseitige Oberfläche und die austrittsseitige Oberfläche bearbeitet werden, ohne dass zu diesem Zweck das Werkstück aus einer jeweiligen Haltevorrichtung entnommen bzw. gedreht werden muss. Bei dem transparenten Werkstück kann es sich insbesondere um ein Werkstück aus Glas handeln.

Bei einer weiteren Variante bildet der Wechselwirkungsbereich einen Modifikationsbereich zur strukturellen Modifikation des Materials des Werkstücks, wobei das Werkstück bevorzugt aus einem für den Laserstrahl transparenten Material, insbesondere aus Glas, besteht. Bei dieser Variante wird bei der Laserbearbeitung das Material des Werkstücks nicht abgetragen, sondern es erfolgt eine strukturelle Modifikation des Werkstück-Materials. Eine solche strukturelle Modifikation kann in einer Umlagerung chemischer Bindungen, in der Bildung von Mikrorissen, etc. bei der Bestrahlung mit Ultrakurzpuls-Laserstrahlung bestehen. Die strukturelle Modifikation kann insbesondere eine Rissbildung des Glas-Materials erzeugen oder begünstigen. Bei dem Glas-Material kann es sich z.B. um Quarzglas oder um eine andere Art von (optischem) Glas handeln. Bei einem transparenten Material ist die strukturelle Modifikation nicht auf die Oberfläche bzw. auf einen oberflächennahen Volumenbereich beschränkt, sondern kann praktisch an beliebiger Stelle innerhalb des Volumens des Werkstücks eingebracht werden können. Eine strukturelle Modifikation an der Oberfläche des Werkstücks ist jedoch ebenfalls möglich, beispielsweise kann die strukturelle Modifikation ein Polieren (lokales Aufschmelzen) der Oberfläche bewirken.

Es kann vorteilhaft sein, wenn die Geometrie der Teilbereiche bzw. der Fokuszonen des Wechselwirkungsbereichs eine Vorzugsrichtung für die Rissbildung vorgibt bzw. festlegt. Dies kann beispielsweise durch eine elliptische oder ovale Form der Fokuszonen erreicht werden, da die Rissbildung bevorzugt entlang der langen Achse der ovalen bzw. elliptischen Fokuszonen erfolgt.

Bei einer weiteren Variante wird das Werkstück nach dem strukturellen Modifizieren entlang einer beim Laserbearbeiten im Volumen des Werkstücks gebildeten Modifikationskontur in zwei Segmente getrennt, wobei das Trennen bevorzugt durch einen mechanischen Trennprozess, einen thermischen Trennprozess oder durch einen Ätzprozess erfolgt. Bei dieser Variante dient das strukturelle Modifizieren zur Vor-Schädigung des Materials des Werkstücks, das Trennen des Werkstücks erfolgt in diesem Fall typischerweise erst nach dem Abschluss des strukturellen Modifizierens. Bei dem mechanischen Trennprozess kann z.B. eine Kraft bzw. eine mechanische Spannung auf das Werkstück ausgeübt werden, um dieses in zwei Segmente zu trennen bzw. zu brechen. Bei dem thermischen Trennprozess kann das Werkstück erwärmt werden, so dass ein Temperaturgradient erzeugt wird, der eine mechanische Spannung in dem Material des Werkstücks erzeugt, welche zu der Trennung führt. Die thermische Behandlung des Werkstücks kann beispielsweise mit Hilfe von Laserstrahlung erfolgen, die von dem Material des Werkstücks absorbiert wird. Dies ist beispielsweise bei der Laserstrahlung eines CO₂-Lasers der Fall, da dieser Laserstrahlung bei einer Wellenlänge von ca. 10 µm erzeugt, die von den meisten Materialien, unter anderem von Quarzglas, absorbiert wird. Für die thermische Behandlung bzw. den thermischen Trennprozess kann beispielsweise ein CO₂-Laserstrahl auf die Oberfläche des Werkstücks eingestrahlt werden. Das Trennen des Werkstücks in zwei Segmente kann auch durch einen Ätzprozess erfolgen, bei dem das Werkstück nach dem strukturellen Modifizieren z.B. in ein Ätzbad gelegt wird.

Für das Trennen ist es günstig, wenn die Modifikationskontur sich möglichst weit in das Volumen des Werkstücks hinein erstreckt. Idealerweise verbindet die Modifikationsstruktur die Oberseite des Werkstücks mit der Unterseite des Werkstücks. Letzteres kann durch ein geeignetes dreidimensionales Profil des zusammenhängenden Wechselwirkungsbereichs erreicht werden, der sich in diesem Fall über die gesamte Dicke des Werkstücks erstreckt. Um eine möglichst große Erstreckung der Teilbereiche bzw. der Fokuszonen in longitudinaler Richtung bzw. in Dickenrichtung des Werkstücks zu erzeugen, ist es auch möglich, dass der Laserstrahl, genauer gesagt die Teilstrahlen, ein Bessel-förmiges Strahlprofil aufweisen. In diesem Fall kann zur Erzeugung der Modifikationskontur auch ein linienförmiger Wechselwirkungsbereich verwendet werden, bei dem die Teilbereiche nicht zwingend in longitudinaler Richtung zueinander versetzt werden.

Die Erfindung betrifft auch eine Bearbeitungsoptik gemäß Anspruch 12. Auch in diesem Fall sind die Teilbereiche typischerweise entlang des zusammenhängenden Wechselwirkungsbereiches aufgereiht.

Bei einer Ausführungsform weist die Bearbeitungsoptik mindestens ein doppelbrechendes Polarisator-Element zur Erzeugung eines lateralen (Orts)Versatzes und/oder eines Winkelversatzes zwischen zwei Teilstrahlen mit unterschiedlichen Polarisationszuständen auf. Hinsichtlich der unterschiedlichen Möglichkeiten der Realisierung des lateralen Versatzes und/oder des Winkelversatzes sei auf die obigen Ausführungen in Zusammenhang mit dem Verfahren verwiesen.

Abhängig von der jeweiligen Bearbeitungs-Anwendung kann es günstig sein, entweder ein doppelbrechendes Polarisator-Element zu verwenden, welches einen Winkelversatz, aber nur einen unwesentlichen Ortsversatz erzeugt (2 f - Setup, z.B. bei Strahlteiler-Anwendungen bzw. Laserabtragen) oder ein doppelbrechendes Polarisator-Element, welches einen Ortsversatz, aber nur einen unwesentlichen Winkelversatz erzeugt (4 f - Setup, beispielsweise bei der Verwendung von Besselähnlichen Strahlprofilen beim Glastrennen bzw. Glasschneiden).

Erfindungsgemäß weist die Bearbeitungsoptik mindestens ein doppelbrechendes Polarisator-Element, insbesondere ein doppelbrechendes Linsen-Element, zur Erzeugung eines longitudinalen Versatzes zwischen zwei Teilstrahlen mit unterschiedlichen Polarisationszuständen auf, die bevorzugt in benachbarte Teilbereiche des zusammenhängenden Wechselwirkungsbereichs fokussiert werden. Wie weiter oben beschrieben wurde, kann mittels eines doppelbrechenden Linsen-Elements ein longitudinaler Versatz zwischen unterschiedlich polarisierten Teilstrahlen erzeugt werden.

Wie weiter oben beschrieben wurde, kann das doppelbrechende Linsen-Element grundsätzlich die Fokussieroptik bilden, d.h. die Bearbeitungsoptik weist kein weiteres fokussierendes Element auf, um die Teilstrahlen in den Fokuszonen bzw. in den Teilbereichen des Wechselwirkungsbereichs zu fokussieren, die bevorzugt in benachbarte Teilbereiche des zusammenhängenden Wechselwirkungsbereichs fokussiert werden.

Da die Größe bzw. der Durchmesser der Teilbereiche bzw. der Fokuszonen in diesem Fall durch die Brennweite des doppelbrechenden Linsen-Elements vorgegeben ist und nur eine begrenzte Anzahl von doppelbrechenden Materialien zur Herstellung des Linsen-Elements zur Verfügung steht, ist in diesem Fall der longitudinale Versatz zwischen den Teilbereichen bzw. den Fokuszonen vorgegeben.

Es hat sich daher als günstig erwiesen, wenn die Fokussieroptik ein nicht doppelbrechendes fokussierendes Element, insbesondere ein weiteres Linsen-Element aus einem nicht doppelbrechenden Material, aufweist bzw. aus einer Fokussierlinse aus einem nicht doppelbrechenden Material besteht. In Kombination mit dem doppelbrechenden Linsen-Element kann in diesem Fall eine gewünschte effektive Brennweite der Fokussieroptik festgelegt und ein gewünschter longitudinaler Versatz der Teilstrahlen vorgegeben bzw. eingestellt werden.

Die Erfindung betrifft auch eine Laserbearbeitungsvorrichtung, umfassend: eine Bearbeitungsoptik wie weiter oben beschrieben sowie eine Laserquelle, insbesondere eine Ultrakurzpuls-Laserquelle, zur Erzeugung eines Laserstrahls, insbesondere eines Laserstrahls mit einem Gauß-förmigen Strahlprofil. Die Laserquelle ist bevorzugt zur Erzeugung eines Single-Mode Laserstrahls mit einem Gauß-förmigen Strahlprofil ausgebildet, dies ist aber nicht zwingend erforderlich.

Die Bearbeitungsoptik kann beispielsweise in einem Laserbearbeitungskopf bzw. in einem Gehäuse eines Laserbearbeitungskopfs untergebracht sein, der relativ zu dem Werkstück bewegbar ist. Die Laserbearbeitungsvorrichtung kann alternativ oder zusätzlich eine Scannereinrichtung umfassen, um die Teilstrahlen auf das Werkstück bzw. auf unterschiedliche Positionen auf dem Werkstück auszurichten. Neben den weiter oben beschriebenen Optiken kann die Bearbeitungsoptik auch weitere Optiken aufweisen. Die Laserbearbeitungsvorrichtung kann auch eine Bewegungseinrichtung, z.B. einen Linearantrieb, zur Bewegung, insbesondere zur Verschiebung des Werkstücks entlang einer Vorschubrichtung aufweisen.

Weitere Vorteile der Erfindung ergeben sich aus der Beschreibung und der Zeichnung.

Es zeigen:
- Fig. 1a,b: schematische Darstellungen von zwei doppelbrechenden Polarisator-Elementen zur Erzeugung eines Winkelversatzes bzw. eines Ortsversatzes zwischen zwei senkrecht zueinander polarisierten Teilstrahlen,
- Fig. 2a,b: schematische Darstellungen einer Bearbeitungsoptik mit einem doppelbrechenden Linsen-Element zur Erzeugung eines longitudinalen Versatzes zwischen Fokuszonen von zwei senkrecht zueinander polarisierten Teilstrahlen,
- Fig. 2c: eine schematische Darstellung einer Bearbeitungsoptik analog zu Fig. 2b mit dem in Fig. 1a gezeigten Polarisator-Element zur Erzeugung eines zusätzlichen lateralen Versatzes der beiden Fokuszonen,
- Fig. 3a,b: schematische Darstellungen einer abtragenden Laserbearbeitung an einem Werkstück,
- Fig. 4a,b: schematische Darstellungen einer das Werkstück-Material modifizierenden Laserbearbeitung zur Trennung des Werkstücks entlang einer Modifikationskontur,
- Fig. 5a,b: schematische Darstellungen einer das Werkstück-Material modifizierenden Laserbearbeitung zur Vorbereitung eines Ätzvorgangs, sowie
- Fig. 6a,b: schematische Darstellungen einer abtragenden Laserbearbeitung zur Oberflächenbearbeitung eines Werkstücks.

In der folgenden Beschreibung der Zeichnungen werden für gleiche bzw. funktionsgleiche Bauteile identische Bezugszeichen verwendet.

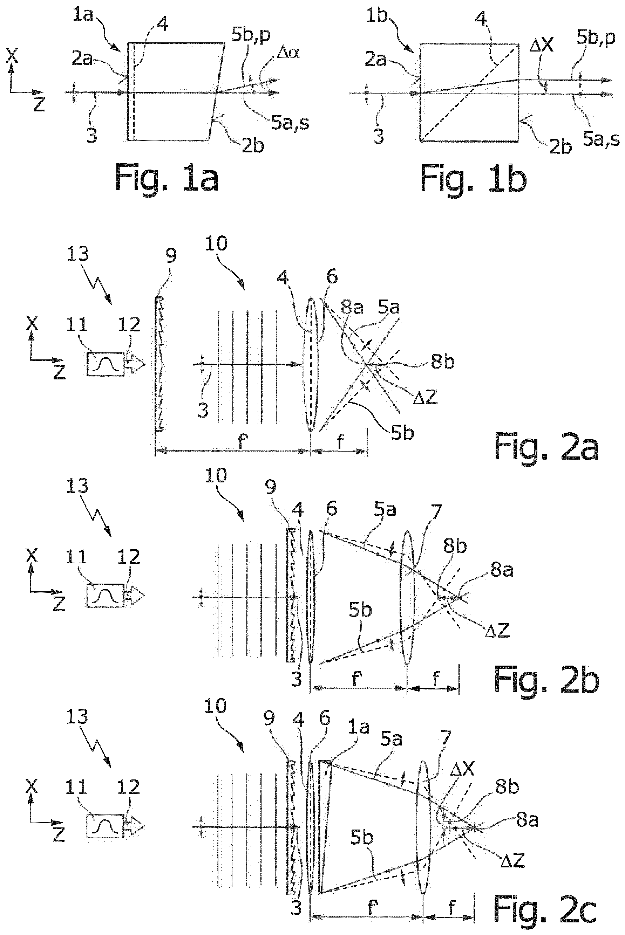

**Fig. 1a****,b** zeigen schematisch jeweils ein doppelbrechendes Polarisator-Element 1a, 1b in Form eines doppelbrechenden Kristalls. Als Kristall-Material für das Polarisator-Element 1a, 1b können unterschiedliche doppelbrechende Materialien verwendet werden, z.B. alpha-BBO (alpha-Bariumborat), YVO4 (Yttrium-Vandanat), kristalliner Quarz, etc. Das doppelbrechenden Polarisator-Element 1a von Fig. 1a ist keilförmig ausgebildet, d.h. eine plane Strahleintrittsfläche 2a zum Eintritt eines Eingangslaserstrahls 3 und eine plane Strahlaustrittsfläche 2b des Polarisator-Elements 1a sind unter einem (Keil-)Winkel zueinander ausgerichtet. Die bzw. eine optische Achse 4 des Kristall-Materials ist parallel zur Strahleintrittsfläche 2a ausgerichtet.

Der in das doppelbrechende Polarisator-Element 1a senkrecht zur Strahleintrittsfläche 2a eintretende unpolarisierte oder zirkular polarisierte Eingangslaserstrahl 3 wird an der unter einem Winkel zur Strahleintrittsfläche 2a geneigten Strahlaustrittsfläche 2b in zwei Teilstrahlen 5a, 5b aufgeteilt, die senkrecht zueinander (s- bzw. p-polarisiert) sind, d.h. die einen von zwei unterschiedlichen Polarisationszuständen aufweisen. In Fig. 1a ist wie allgemein üblich der s-polarisierte Teilstrahl 5a durch einen Punkt gekennzeichnet, während der zweite, p-polarisierte Teilstrahl 5b durch einen Doppelpfeil gekennzeichnet ist. Der erste, p-polarisierte Teilstrahl 5a wird beim Austritt aus dem doppelbrechenden Polarisator-Element 1a weniger stark gebrochen als der zweite, s-polarisierte Teilstrahl 5a, so dass ein Winkelversatz Δα zwischen dem ersten und dem zweiten Teilstrahl 5a, 5b auftritt. Der erste und zweite Teilstrahl 5a, 5b treten hierbei an derselben Stelle an der Strahlaustrittsfläche 2b aus dem doppelbrechenden Polarisator-Element 1a aus, d.h. es wird zwar der Winkelversatz Δα, aber kein Ortsversatz zwischen den beiden Teilstrahlen 5a, 5b erzeugt.

Bei dem in Fig. 1b gezeigten Polarisator-Element 1b sind die Strahleintrittsfläche 2a und die Strahlaustrittsfläche 2b parallel zueinander ausgerichtet und die optische Achse 4 des Kristall-Materials ist unter einem Winkel von 45° zur Strahleintrittsfläche 2a ausgerichtet. Der senkrecht zur Strahleintrittsfläche 2a auftreffende Eingangsstrahl 3 wird in diesem Fall an der Strahleintrittsfläche 2a in einen ersten, ordentlichen Teilstrahl 5a und einen zweiten, außerordentlichen Teilstrahl 5b aufgeteilt. Die beiden Teilstrahlen 5a, 5b treten an der Strahlaustrittsfläche 2b parallel, d.h. ohne einen Winkelversatz, aber mit einem Ortsversatz **Δx** aus.

Die beiden in Fig. 1a und in Fig. 1b dargestellten doppelbrechenden Polarisator-Elemente 1a, 1b unterscheiden sich somit grundlegend dadurch, dass das in Fig. 1a gezeigte Polarisator-Element 1a einen Winkelversatz Δα (ohne Ortsversatz) und dass das in Fig. 1b gezeigte Polarisator-Element 1b einen Ortsversatz Δx (ohne Winkelversatz) erzeugt. Es versteht sich, dass beispielsweise das in Fig. 1a dargestellte keilförmige Polarisator-Element 1a auch ausgebildet sein kann, sowohl einen Ortsversatz Δx als auch einen Winkelversatz Δα erzeugen, wie dies bei herkömmlichen Prismen-Polarisatoren der Fall ist, die in der Regel zwei doppelbrechende optische Elemente aufweisen.

**Fig. 2a****-c** zeigen jeweils ein Polarisator-Element in Form eines doppelbrechenden, fokussierenden Linsen-Elements 6, auf das ein kollimierter Eingangslaserstrahl 3 eingestrahlt wird. Der Eingangslaserstrahl 3 wird an dem doppelbrechenden Linsen-Element 6 in zwei Teilstrahlen 5a, 5b aufgeteilt, die senkrecht zueinander (s- bzw. p-polarisiert) sind. Bei dem in Fig. 2a gezeigten Beispiel wird der erste, s-polarisierte Teilstrahl 5a beim Austritt aus dem doppelbrechenden Linsen-Element 6 stärker gebrochen als der zweite, p-polarisierte Teilstrahl 5b, so dass ein longitudinaler (Orts-)Versatz Δz zwischen einer Fokuszone 8a des ersten Teilstrahls 5a und einer Fokuszone 8b des zweiten Teilstrahls 5a, 5b erzeugt wird. Die beiden Fokuszonen 8a, 8b sind in Fig. 2a-c zur Vereinfachung der Darstellung punktförmig dargestellt, überlappen sich aber in longitudinaler Richtung (Z-Richtung). Das doppelbrechende Linsen-Element 6 ist wie die Polarisator-Elemente 1a, 1b aus einem doppelbrechenden Kristall gebildet.

In Fig. 2b teilt das doppelbrechende fokussierende Linsen-Element 6 wie in Fig. 2a den Eingangslaserstrahl 3 auf zwei Teilstrahlen 5a, 5b auf. Der erste, an dem doppelbrechenden Linsen-Element 6 stärker gebrochene Teilstrahl 5a wird an einem weiteren, nicht doppelbrechenden Linsen-Element 7 weniger stark gebrochen als der zweite Teilstrahl 5b, wodurch ebenfalls ein longitudinaler Versatz Δz zwischen den beiden Fokuszonen 8a, 8b erzeugt wird. Bei dem in Fig. 2b dargestellten Beispiel ist die Fokuszone 8a des ersten Teilstrahls 5a jedoch in longitudinaler Richtung Z weiter von dem doppelbrechenden Linsen-Element 4 entfernt als die Fokuszone 8b des zweiten Teilstrahls 5b.

Bei dem in Fig. 2c gezeigten Beispiel ist im Strahlengang des Eingangslaserstrahls 3 unmittelbar nach dem doppelbrechenden Linsen-Element 6 das keilförmige doppelbrechende Polarisator-Element 1a von Fig. 1a angeordnet. Durch das keilförmige Polarisator-Element 1a wird ein zusätzlicher lateraler Versatz Δx der Fokuszonen 8a, 8b der beiden Teilstrahlen 5a, 5b erzeugt.

Die in Fig. 2a-c gezeigten Linsen-Elemente 6, 7 sowie das keilförmige Polarisator-Element 1a sind Teil einer Bearbeitungsoptik 10, die auch eine diffraktive Strahlteiler-Optik 9 umfasst. Die Bearbeitungsoptik 10 ist Teil einer Laserbearbeitungsvorrichtung 13, die zusätzlich eine Laserquelle 11 in Form einer Ultrakurzpuls-Laserquelle umfasst. Die Laserquelle 11 erzeugt einen Laserstrahl 12, der im gezeigten Beispiel ein Gauß-förmiges Strahlprofil aufweist und der in die Bearbeitungsoptik 10 eintritt. An der diffraktiven Strahlteiler-Optik 9 wird der Laserstrahl 12 in eine Mehrzahl von Strahlenbündeln aufgeteilt, die beispielsweise parallel zueinander ausgerichtet sind und die einen jeweiligen Eingangslaserstrahl 3 für das doppelbrechende Linsen-Element 7 bilden. Zur Vereinfachung der Darstellung ist in Fig. 2a-c nur ein einziger Eingangslaserstrahl 3 gezeigt, der auf zwei Teilstrahlen 5a, 5b aufgeteilt wird.

Bei dem in Fig. 2a gezeigten Beispiel ist die diffraktive Strahlteiler-Optik 9 im Abstand der eintrittsseitigen Brennweite f' vor dem doppelbrechenden Linsen-Element 6 angeordnet. Das doppelbrechende Linsen-Element 6 bildet in diesem Fall die Fokussieroptik der Bearbeitungsoptik 10 und fokussiert die Teilstrahlen 5a, 5b ungefähr im Abstand ihrer austrittsseitigen Brennweite f. Bei den in Fig. 2b,c gezeigten Beispielen erfolgt die Fokussierung hingegen im Wesentlichen durch das weitere, nicht doppelbrechende Linsen-Element 7. Das doppelbrechende Linsen-Element 6 ist - ebenso wie das in Fig. 2c gezeigte keilförmige Polarisator-Element 1a - ungefähr im Abstand der eintrittsseitigen Brennweite f von dem weiteren Linsen-Element 7 angeordnet, welches eine deutlich größere Brechkraft aufweist als das doppelbrechende Linsen-Element 6 und daher nachfolgend auch als Fokussier-Linse bzw. als Fokussier-Optik bezeichnet wird. Die Reihenfolge der Anordnung des doppelbrechenden Linsen-Elements 6, des keilförmigen Polarisator-Elements 1a sowie des diffraktiven Strahlteiler-Elements 9 im Strahlengang ist grundsätzlich beliebig, diese sollten aber bei dem in Fig. 2c gezeigten Beispiel typischerweise ungefähr im Abstand der eintrittsseitigen Brennweite f' von der Fokussier-Linse 7 angeordnet sein.

Mit Hilfe der in Fig. 2a-c gezeigten Bearbeitungsoptik 10 bzw. der Laserbearbeitungsvorrichtung 13 können die beiden Teilstrahlen 5a, 5b in zwei benachbarten Fokuszonen 8a, 8b fokussiert werden, die sich zumindest teilweise überlappen. Durch die Strahlteiler-Optik 9 kann eine Mehrzahl von Eingangslaserstrahlen 3 erzeugt werden, die an dem bzw. an den Polarisator-Elementen 1a, 6 in eine Mehrzahl von Paaren von Teilstrahlen 5a, 5b aufgeteilt und in entsprechende Paare von Fokuszonen 8a, 8b fokussiert werden. Auf diese Weise kann aus den teilweise überlappenden Fokuszonen 8a, 8b ein zusammenhängender Wechselwirkungsbereich zur Bearbeitung eines Werkstücks gebildet werden, wie dies weiter unten näher beschrieben ist.

Aufgrund der Möglichkeit, sowohl einen lateralen Versatz Δx als auch einen longitudinalen Versatz Δz der Fokuszonen 8a, 8b zu erzeugen, kann ein zusammenhängender Wechselwirkungsbereich gebildet werden, der eine annähernd beliebige dreidimensionale Kurve im Raum bzw. in der X-Z-Ebene beschreibt.

Insbesondere kann der zusammenhängende Wechselwirkungsbereich mehrere zueinander in longitudinaler Richtung Δz versetzte Fokuszonen 8a, 8b bzw. Teilbereiche aufweisen, wie dies weiter unten näher beschrieben ist.

Bei den nachfolgenden Beispielen erfolgt das Laserbearbeiten eines Werkstücks durch das Verfahren eines zusammenhängenden Wechselwirkungsbereichs entlang eines Bearbeitungspfads, d.h. durch die Kumulation von aneinander angrenzenden zusammenhängenden Wechselwirkungsbereichen, die Ablations- bzw. Modifikationsbereiche bilden. Zur Vereinfachung der Darstellung wird in den nachfolgenden Beispielen angenommen, dass zum Verfahren des zusammenhängenden Wechselwirkungsbereichs ein geradliniger Vorschub des Werkstücks erfolgt. Es versteht sich, dass allgemein beliebige andere Vorschub-GeometrienNerläufe des Bearbeitungspfads möglich sind. Insbesondere kann hierbei nicht nur das Werkstück, sondern auch die Bearbeitungsoptik bzw. ein Laserbearbeitungskopf verfahren werden, in dem die Bearbeitungsoptik angeordnet ist.

Im Hinblick auf in Vorschubrichtung aufeinander folgende Modifikationsbereiche/Ablationsbereiche kann die Geometrie der einfallenden Laserstrahlung, beispielsweise ein Winkelbereich des Strahlquerschnitts der Laserstrahlung, so gewählt werden, dass bei einer Aufreihung von Modifikationsbereichen/Ablationsbereichen in Vorschubrichtung eine vorher eingebrachte Modifikation bzw. ein vorher bearbeiteter Ablationsbereich nur einen unbedeutenden Einfluss auf die Ausbildung der nachfolgenden Modifikationen/Ablationsbereiche hat.

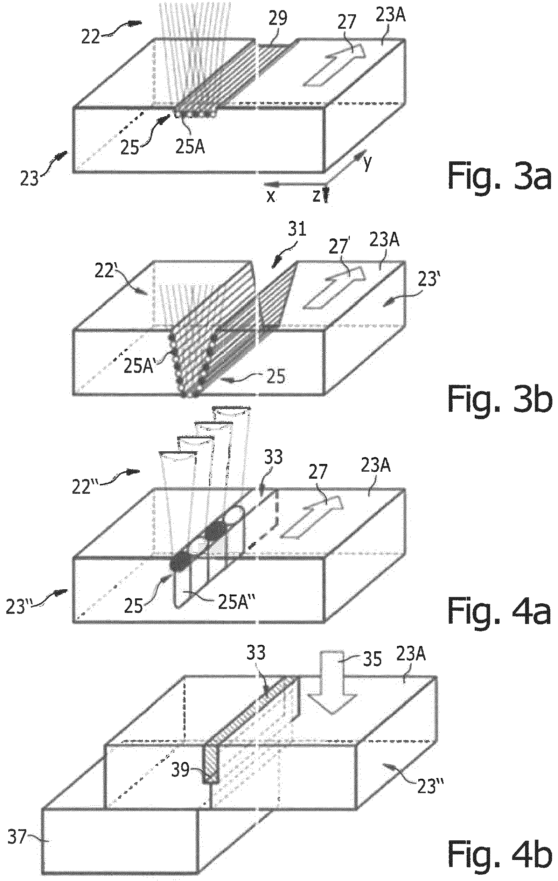

**Fig. 3a** zeigt eine Laserbearbeitung in Form eines Laser-Abtragprozesses, bei dem an einer Oberseite 23A eines plattenförmigen Werkstücks 23 eine Abtrag von Werkstück-Material vorgenommen wird, indem eine Mehrzahl von Teilstrahlen 22 auf die Oberseite 23A des plattenförmigen Werkstücks 23 fokussiert wird, wobei ein linienförmiger zusammenhängender Wechselwirkungsbereich 25 gebildet wird. In dem Wechselwirkungsbereich 25 sind die Teilbereiche 25A (Fokuszonen), auf welche die Teilstrahlen 22 fokussiert werden, nebeneinander mit alternierenden, unterschiedlichen Polarisationszuständen (z.B. s bzw. p) in X-Richtung eines XYZ-Koordinatensystems aufgereiht, wobei benachbarte Teilbereiche 25A sich teilweise überlappen. Die alternierenden Polarisationszustände (z.B. s bzw. p) sind durch helle und dunkle Bereiche innerhalb des Wechselwirkungsbereichs 25 angedeutet und vermeiden eine Interferenz benachbarter Teilstrahlen 22.

In Fig. 3a liegt kein Versatz der Teilbereiche 25A in Z-Richtung vor, die der Propagationsrichtung der Laserstrahlung (longitudinale Richtung) entspricht, d.h. die Teilbereiche 25A liegen in einer (Fokus-)Ebene, die senkrecht zur longitudinalen Richtung Z ausgerichtet ist. Ein in Fig. 3a dargestellter Pfeil 27 verdeutlicht eine Relativbewegung des Wechselwirkungsbereichs 25 quer zur Aufreihungsrichtung (X-Richtung) in Form einer Verschiebung des Werkstücks 23 in Y-Richtung. Bei einem linearen Vorschub ergibt sich bei der Laserbearbeitung ein abgetragener Streifen 29 mit der Breite des zusammenhängenden Wechselwirkungsbereichs 25 und einer Tiefe, die der Ablationsleistung der Teilstrahlen 22 in den Teilbereichen 25A (d.h. den Fokuszonen) entspricht.

**Fig. 3b** zeigt ebenfalls eine Laserbearbeitung in Form eines Laser-Abtragprozesses, bei dem Material von der Oberseite 23A eines plattenförmigen Werkstücks 23' abgetragen wird. Wie in Fig. 3a wird auch in Fig. 3b zu diesem Zweck eine Mehrzahl von Teilstrahlen 22' auf das plattenförmige Werkstück 23 fokussiert, wobei ein zusammenhängender Wechselwirkungsbereich 25 gebildet wird. Im Gegensatz zu Fig. 3a sind die Teilbereiche 25A' nicht nur in lateraler Richtung (X-Richtung), sondern auch zusätzlich in longitudinaler Richtung (Z-Richtung) versetzt und in Fig. 3b beispielshaft V-förmig angeordnet. Durch die Relativbewegung des Werkstücks 23' in Y-Richtung, d.h. quer zu einer durch das V-förmige Profil des Wechselwirkungsbereichs 25 aufgespannten Ebene (in Fig. 3b die X-Z-Ebene) ergibt sich ein abgetragener Einschnitt 31 mit der V-Form des zusammenhängenden Wechselwirkungsbereichs 25. Auch bei dem in Fig. 3b gezeigten Beispiel bewirken die alternierenden Polarisationszustände - wieder angedeutet durch helle und dunkle Bereiche - von unmittelbar benachbarten Teilstrahlen 22' einen homogenen Abtrag, der nicht durch die Interferenz benachbarter Teilstrahlen 22' beeinflusst ist. Zur Erzeugung des in Fig. 3b dargestellten abgetragenen Einschnitts 31 kann das Werkstück 23'in mehreren aufeinander folgenden Abtrags-Schritten in Y-Richtung verschoben werden, wobei zwischen aufeinander folgenden Abtrags-Schritten der Wechselwirkungsbereich 25 mit dem V-förmigen Profil in Z-Richtung verschoben, d.h. weiter auf das Werkstück 23' abgesenkt wird. Alternativ oder zusätzlich kann die Geometrie des V-förmigen Wechselwirkungsbereichs 25 während der abtragenden Laserbearbeitung verändert werden, beispielsweise kann die Erstreckung des V-förmigen Wechselwirkungsbereichs 25 in longitudinaler Richtung Z nach und nach vergrößert werden, d.h. der V-förmige Wechselwirkungsbereich 25 wird bei aufeinander folgenden Ablations-Schritten zunehmend spitzer. Beim Material des Werkstücks 23, 23', das in Fig. 3a,b abtragend bearbeitet wird, kann es sich beispielsweise um ein metallisches Material, ein Glas-Material, etc. handeln.

**Fig. 4a** zeigt eine Laserbearbeitung zur Erzeugung einer strukturellen Modifikation von Material eines plattenförmigen Werkstücks 23", die sich von der Oberseite 23A des Werkstücks 23" entlang der Propagationsrichtung (Z-Richtung) der einfallenden Laserstrahlung bzw. der Teilstrahlen 22" in das (transparente) Werkstück 23" hinein erstreckt. Zu diesem Zweck wird ein zusammenhängender Wechselwirkungsbereich 25 durch eine Aufreihung von nebeneinander (in Fig. 4a in Y-Richtung) verlaufenden, sich teilweise überlappenden länglichen Teilbereichen 25A" (Fokuszonen) einer Mehrzahl von Teilstrahlen 22" gebildet. Wie in Fig. 3a liegt kein Versatz der Teilbereiche 25A" in Z-Richtung vor. Alternierende Polarisationszustände (s bzw. p) sind wieder durch helle und dunkle Bereiche angedeutet. Beispielhaft sind in Fig. 4a vier längliche Teilbereiche 25A" gezeigt, die durch eine geeignete Phasenaufprägung auf die Teilstrahlen 22" bewirkt werden, sodass sich z. B. langgezogene Fokuszonen bzw. Teilbereiche 25A" von Bessel-Strahlen oder invertierten Bessel-Strahlen ausbilden. Die langgezogenen Teilbereiche 25A" können mittels einer strahlformenden Optik der Bearbeitungsoptik 10 erzeugt werden, die z.B. ein Axicon oder ein diffraktives optisches Element aufweisen kann. Für Details einer solchen strahlformenden Optik sei auf die weiter oben zitierte DE 10 2019 205 394.7 verwiesen. Um die strukturelle Modifikation auch im Volumen des Werkstücks 23" zu erzeugen, ist dieses aus einem für den Laserstrahl 12 bzw. für die Wellenlänge des Laserstrahls 12 transparenten Material, im gezeigten Beispiel aus Glas, gebildet.

Bei einer Relativbewegung entlang der Aufreihungsrichtung, d. h. in Y-Richtung, ergibt sich eine Material-Modifikation eines schmalen Streifens 33 mit der Breite eines einzelnen Teilbereichs 25A". Die Tiefe des Streifens 33 in Z-Richtung wird durch die Länge der langgezogenen Fokuszonen bzw. Teilbereiche 25A" bedingt. Wie in Fig. 4a durch punktierte, den Strahlquerschnitt der zur Bearbeitung verwendeten Teilstrahlen 22 andeutende Halbkreise dargestellt ist, sind die Teilstrahlen 22 bevorzugt auf den vorlaufenden Winkelanteil bzw. Winkelbereich beschränkt, so dass während des Vorschubs keine Störung des Laserstrahls und damit der Wechselwirkung durch bereits erzeugte Modifikationen eintritt. Die strukturelle Modifikation des Materials des Werkstücks 23" führt im gezeigten Beispiel zur Bildung von Mikrorissen, die das Glas-Material innerhalb des modifizierten Streifens 33 schwächen.

**Fig. 4b** zeigt, wie das Werkstück 23" teilweise auf einer Unterlage 37 ab- bzw. aufgelegt wird und eine Kraft (Pfeil 35) auf die nicht-abgelegte Seite des Werkstücks 23" ausgeübt wird. Unterhalb des modifizierten Streifens 33, der eine Modifikationskontur darstellt, bildet sich ein Riss 39 durch die gesamte Dicke des Werkstücks 23" aus, sodass es zu einer Trennung des Werkstücks 23" in zwei Segmente kommt.

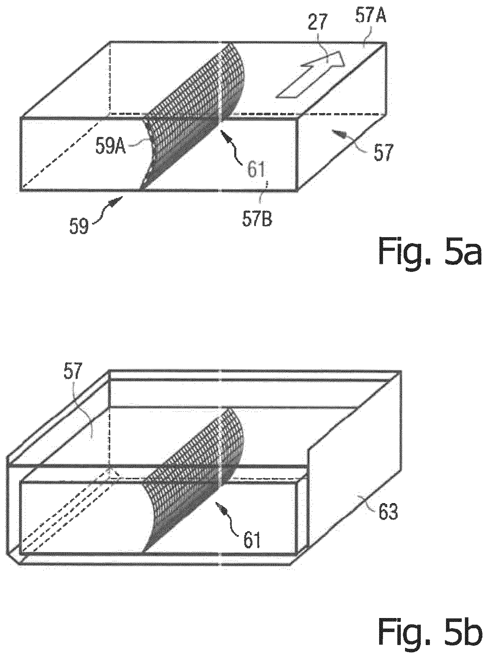

**Fig. 5a** zeigt eine von einer linearen Form abweichende, gebogene bzw. gekrümmte Aufreihung von Teilbereichen 59A eines zusammenhängenden Wechselwirkungsbereichs 59 in einem (transparenten) Material eines plattenförmigen Werkstücks 57. Wie in Fig. 4a,b wird eine Material-Modifikation mittels des zusammenhängenden Wechselwirkungsbereichs 59 erzeugt, der sich gekrümmt durch das Werkstück 57 von dessen Oberseite 57A zu dessen Unterseite 57B erstreckt. Benachbarte Teilbereiche bzw. Fokuszonen 59A des Wechselwirkungsbereichs 59 überlappen sich teilweise, so dass durch eine Relativbewegung von Werkstück 57 und Wechselwirkungsbereich 59 (Pfeil 27) eine kontinuierlich durchgängige/ununterbrochene gebogene Modifikationskontur in Form einer Modifikationsebene 61 im Material ausgebildet wird.

**Fig. 5b** zeigt das modifizierte Werkstück 57 in einem Ätzbecken 63 (Ätzbad), in dem das Material des Werkstücks 57 im Bereich der Modifikationsebene 61 im gezeigten Beispiel ätzend entfernt wird. Dies bewirkt wie in Fig. 4a,b im Ergebnis eine Trennung des Werkstücks 57 in zwei Segmente.

Bei den weiter oben beschriebenen modifikationsbasierten Trennungsverfahren kann die Separation von Segmenten direkt oder im Anschluss an die Laserbearbeitung von alleine erfolgen oder sie kann durch einen weiteren Prozess induziert werden, z.B. durch den in Zusammenhang mit Fig. 4a,b beschriebenen mechanischen Trennprozess, durch den in Zusammenhang mit Fig. 5a,b beschriebenen Ätzprozess oder durch einen nicht bildlich dargestellten thermischen Trennprozess.

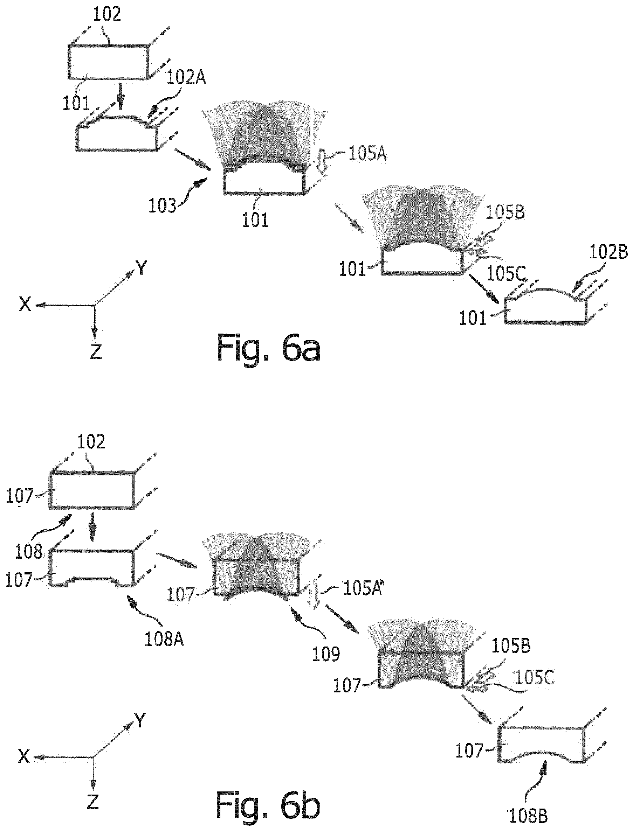

Neben der weiter oben beschriebenen abtragenden bzw. trennenden Laserbearbeitung ist es auch möglich, mit Hilfe der weiter oben beschriebenen Multispot-Anordnung bzw. mit Hilfe (mindestens) eines zusammenhängenden Wechselwirkungsbereichs eine Oberflächenbearbeitung vorzunehmen, d.h. die Laserstrahlung bzw. die Laserbearbeitungsvorrichtung 13 dient als Formwerkzeug. **Fig. 6a** zeigt beispielhaft eine laserstrahleintrittsseitige Bearbeitung eines Werkstücks 101 und **Fig. 6b** eine laserstrahlaustrittsseitige Bearbeitung eines Werkstücks 107.

Bei der strahleintrittsseitigen Bearbeitung mittels eines zusammenhängenden Wechselwirkungsbereichs (Multispot-Anordnung) als Formwerkzeug kommen vor allem abtragende oder lokal modifizierende Verfahren in Betracht. Unter die modifizierenden Verfahren fällt beispielsweise ein Polieren über lokales Aufschmelzen und Ausnutzen einer vorliegenden Oberflächenspannung.

Fig. 6a zeigt die Verwendung einer Multispot-Laserformschneide zur lasereintrittsseitigen Ablation an einem Werkstück 101. Eine Oberseite 102 des Werkstücks 101 wird optional in einem ersten Bearbeitungsschritt grob vorstrukturiert. Dies kann beispielsweise mit einem auf Durchsatz optimierten Laserbearbeitungsprozess reduzierter Präzision erfolgen und führt zu einer grob strukturierten Oberfläche 102A, die mithilfe des Laserformwerkzeugs bzw. mittels Laserbearbeitung in eine angestrebte Freiform-Oberfläche 102B übergeführt werden soll. Eine der angestrebten Freiform-Oberfläche 102B angepasste Multispot-Fokuskurve bzw. Fokuslinie in Form eines zusammenhängenden Wechselwirkungsbereichs 103 wird an der richtigen Position über der grob strukturierten Oberseite 102A zugestellt und auf diese abgesenkt (Pfeil 105A), um im Bereich der (gekrümmten) Fokuslinie 103 das Material des Werkstücks 101 abzutragen. Wie weiter oben verdeutlichen Punkte bzw. Kreise der Fokuslinie 103 nebeneinander liegende Teilbereiche mit unterschiedlichen Polarisationskomponenten, sodass Interferenz zwischen benachbarten Teilbereichen vermieden wird.

Anschließend an das Absenken erfolgt eine Relativbewegung (Pfeil 105B) zwischen der Multispot-Fokuskurve bzw. dem Wechselwirkungsbereich 103 und dem Werkstück 101, sodass die Oberfläche 102A der Oberseite 102 die gewünschte Form erhält. Ferner kann optional eine Rauheitsminderung der Oberfläche 102B durch Versatz der Spots der Multispot-Fokuskurve 103 in Richtung der Fokuslinie (Pfeil 105C) bewirkt werden (z. B. SLM("spatial light modulator")-gesteuert). Alternativ oder zusätzlich kann die Multispot-Fokuskurve bzw. der Wechselwirkungsbereich 103 als Ganzes um das Werkstück 101 zur Rauheitsminderung in einem kleinen Winkelbereich rotiert werden. Zusätzlich können die Prozessparameter im Laufe des Bearbeitungsprozesses angepasst werden, um z. B. nach einem Laserfräs- bzw. Abtrags-Schritt zu einer dem Schleifen (feinere Fokuslinie) und dann dem Polieren (lokales Aufschmelzen) vergleichbaren Oberflächenqualität zu kommen.

Fig. 6b zeigt die Verwendung einer Multispot-Laserformschneide zur laseraustrittseitigen Bearbeitung eines Werkstücks 107, d.h. an seiner Unterseite 108. Die Bearbeitungsschritte sind im Wesentlichen analog zum in Fig. 6a dargestellten Bearbeitungsprozess (grobe Strukturierung der laseraustrittsseitigen Oberfläche 108A, Ausbilden einer Multispot-Fokuslinie bzw. Multispot-Fokuskurve 109 entsprechend einer angestrebten Freiform-Oberfläche 108B, Anheben der Multispot-Fokuskurve 109 oder ggf. Absenken des Werkstücks 107 (Pfeil 105A'), Durchführen eine Relativbewegung (Pfeil 105B') zwischen Multispot-Fokuskurve 109 und Werkstück 107, optional Rauheitsminderung (Pfeil 105C')). Eine Bearbeitung der Laseraustrittsseite (Unterseite 108) des Werkstücks 107 setzt eine Transparenz des Werkstücks 107 mit entsprechender optischer Qualität der Eintrittsseite (Oberseite 102) und des Volumens des Werkstücks 107 voraus, damit die Energie der Laserstrahlung durch die Eintrittsfläche und das Volumen bis zu der Laseraustrittsseite 108A des Werkstücks 107 geführt werden kann.

Allgemein lassen sich unter diesen Bedingungen austrittsseitig mit einem Laserformwerkzeug ähnliche Bearbeitungsprozesse wie eintrittsseitig realisieren, wobei verbleibende propagationsbeeinflussende Eigenschaften des Volumens und der Eintrittsfläche des Werkstücks 107 bei der Strahlformung berücksichtigt werden können. Bei auf eine hohe Abtragrate ausgelegten rückseitig abtragenden Bearbeitungsverfahren mit einem Laserformwerkzeug ist es vorteilhaft, dass die Abtrags-Produkte, anders als bei eintrittsseitiger Bearbeitung, die Strahlpropagation bis zur Bearbeitungszone nicht beeinflussen.

Ergänzend sei erwähnt, dass bei der Laserbearbeitung auch mehrere zusammenhängende Wechselwirkungsbereiche gleichzeitig erzeugt werden können, die jeweils voneinander beabstandet sind. So können beispielsweise mehrere, aufgrund der gleichen Relativbewegung parallel verlaufende Modifikationen des Materials (z. B. im Inneren des Werkstücks zur Markierung des Werkstücks) oder Ablationsbereiche gleichzeitig ausgebildet werden.

Die Ablations- bzw. die Modifikationsgeometrie wird durch die Strahlformung des Laserstrahls bzw. der Teilstrahlen 22, 22', 22" bestimmt. Die Erzeugung räumlicher Gradienten in benachbarten Fokuszonen bzw. Wirkungsbereichen 25A, 25A', 25A" kann durch geeignete optische Systeme bzw. Bearbeitungsoptiken erfolgen. Die Erzeugung von zeitlichen Gradienten kann durch die Ausbildung von Pulsgruppen oder einer Pulsformung des Ultrakurzpuls-Laserstrahls 12 vorgenommen werden. Für eine schnelle Bearbeitung kann die Erzeugung einer einzelnen Ablations- oder Modifikationsgeometrie mit nur einem einzelnen Laserpuls/einer einzigen Laserpulsgruppe gleichzeitig erfolgen, so dass eine Position am Werkstück in diesem Fall nur einmal angefahren wird.

## Patentansprüche

1. Verfahren zum Laserbearbeiten eines Werkstücks (23, 23', 23", 59, 101, 107), umfassend:
Aufteilen eines bevorzugt gepulsten Laserstrahls (12, 3) auf eine Mehrzahl von Teilstrahlen (22, 22', 22", 5a, 5b), die jeweils einen von zwei unterschiedlichen Polarisationszuständen (s, p) aufweisen,
Bearbeiten des Werkstücks (23, 23', 23", 59, 101, 107) durch Fokussieren der Mehrzahl von Teilstrahlen (22, 22', 22") in einer Mehrzahl von zumindest teilweise überlappenden Teilbereichen (25A, 25A', 25A", 59A) eines zusammenhängenden Wechselwirkungsbereichs (25, 59, 103, 109), wobei Teilstrahlen (22, 22', 22") mit jeweils unterschiedlichen Polarisationszuständen (s, p) in benachbarte Teilbereiche (25A, 25A', 25A", 59A) des zusammenhängenden Wechselwirkungsbereichs (25, 59, 103, 109) fokussiert werden, **dadurch gekennzeichnet, dass** zumindest zwei Teilbereiche (25A', 59A) des zusammenhängenden Wechselwirkungsbereichs (25, 59, 103, 109) in longitudinaler Richtung (Z), d.h. in Ausbreitungsrichtung der Teilstrahlen (22, 22', 22"), zueinander versetzt sind, wobei bei dem beim Aufteilen des Laserstrahls (3) an mindestens einem doppelbrechenden Linsen-Element (6) ein longitudinaler Versatz (Δz) zwischen zwei Teilstrahlen (22, 22', 22", 5a, 5b) mit unterschiedlichen Polarisationszuständen (s, p) erzeugt wird.

2. Verfahren nach Anspruch 1, bei dem der Laserstrahl (3) beim Aufteilen auf die Mehrzahl von Teilstrahlen (22, 22', 22", 5a, 5b) eine bevorzugt diffraktive Strahlteiler-Optik (9) und mindestens ein bevorzugt doppelbrechendes Polarisator-Element (6, 1a) durchläuft.

3. Verfahren nach Anspruch 1 oder 2, bei dem beim Aufteilen des Laserstrahls (3) an mindestens einem doppelbrechenden Polarisator-Element (1a, 1b) ein lateraler Versatz (Δx) und/oder ein Winkelversatz (Δα) zwischen zwei Teilstrahlen (22, 22', 22", 5a, 5b) mit unterschiedlichen Polarisationszuständen (s, p) erzeugt wird, die bevorzugt in benachbarte Teilbereiche (25A, 25A', 25A", 59A) des zusammenhängenden Wechselwirkungsbereichs (25, 59, 103, 109) fokussiert werden.

4. Verfahren nach einem der vorhergehenden Ansprüche, bei dem der longitudinale Versatz (Δz) zwischen zwei Teilstrahlen (22, 22', 22", 5a, 5b) mit unterschiedlichen Polarisationszuständen (s, p) derart erzeugt wird, dass diese in benachbarte Teilbereiche (25A, 25A', 25A", 59A) des zusammenhängenden Wechselwirkungsbereichs (25, 59, 103, 109) fokussiert werden.

5. Verfahren nach einem der vorhergehenden Ansprüche, wobei die Teilbereiche (25A', 59A) des zusammenhängenden Wechselwirkungsbereichs (25, 59, 103, 109) einen zusätzlichen Versatz in lateraler Richtung (Δx) aufweisen.

6. Verfahren nach einem der vorhergehenden Ansprüche, wobei der zusammenhängende Wechselwirkungsbereich (25, 59, 103, 109) eine gekrümmte Kontur aufweist, die sich insbesondere in longitudinaler Richtung (Z) erstreckt, und/oder wobei der zusammenhängende Wechselwirkungsbereich (25, 59, 103, 109) nicht in einer Ebene liegt.

7. Verfahren nach einem der vorhergehenden Ansprüche, bei dem bei der Laserbearbeitung der zusammenhängende Wechselwirkungsbereich (25, 59, 103, 109) und das Werkstück (3, 59, 101, 107) relativ zueinander bewegt werden, wobei die Bewegung bevorzugt entlang einer Vorschubrichtung (27, 105B, 105B') erfolgt.

8. Verfahren nach einem der vorhergehenden Ansprüche, bei dem der Wechselwirkungsbereich einen Ablationsbereich (25, 103, 109) zum Abtragen von Material des Werkstücks (23, 23', 101, 107) bildet.

9. Verfahren nach Anspruch 8, bei dem der Ablationsbereich (25, 103) an einer eintrittsseitigen Oberfläche (23A, 102) des Werkstücks (23, 23' 101) oder an einer austrittsseitigen Oberfläche (108) des Werkstücks (107) gebildet wird, wobei beim Laserbearbeiten bevorzugt eine vorgegebene, insbesondere dreidimensionale Flächenform (102B, 108B) an der eintrittsseitigen oder an der austrittsseitigen Oberfläche (102, 108) erzeugt wird.

10. Verfahren nach einem der Ansprüche 1 bis 7, bei dem der Wechselwirkungsbereich einen Modifikationsbereich (25, 59) zur strukturellen Modifikation eines Materials des Werkstücks (23", 59) bildet, wobei das Werkstück (23", 59) bevorzugt aus einem für den Laserstrahl (3) transparenten Material, insbesondere aus Glas, besteht.

11. Verfahren nach Anspruch 10, bei dem das Werkstück (23", 59) nach dem strukturellen Modifizieren entlang einer beim Laserbearbeiten im Volumen des Werkstücks (23", 59) gebildeten Modifikationskontur (33, 61) getrennt wird, wobei das Trennen bevorzugt durch einen mechanischen Trennprozess, einen thermischen Trennprozess oder durch einen Ätzprozess erfolgt.

12. Bearbeitungsoptik (10) zum Laserbearbeiten eines Werkstücks (23, 59, 101, 107), umfassend:
eine bevorzugt diffraktive Strahlteiler-Optik (9) und mindestens ein doppelbrechendes Polarisator-Element (6, 1a, 1b) zum Aufteilen eines bevorzugt gepulsten Laserstrahls (12, 3) auf eine Mehrzahl von Teilstrahlen (22, 22', 22", 5a, 5b), die jeweils einen von zwei unterschiedlichen Polarisationszuständen (s, p) aufweisen,
eine Fokussieroptik (6, 7) zur Fokussierung der Mehrzahl von Teilstrahlen (22, 22', 22") in einer Mehrzahl von zumindest teilweise überlappenden Teilbereichen (25A, 25A', 25A", 59A) eines zusammenhängenden Wechselwirkungsbereichs (25, 59, 103, 109), wobei die Bearbeitungsoptik (10) ausgebildet ist, Teilstrahlen (22, 22', 22", 5a, 5b) mit jeweils unterschiedlichen Polarisationszuständen (s, p) in benachbarte Teilbereiche (25A, 25A', 25A", 59A) des zusammenhängenden Wechselwirkungsbereichs (25, 59, 103, 109) zu fokussieren, **dadurch gekennzeichnet, dass** das mindestens eine doppelbrechende Polarisator-Element (6) einen longitudinalen Versatz (Δz), d.h. in Ausbreitungsrichtung der Teilstrahlen (22, 22', 22"), zwischen zwei Teilstrahlen (22, 22', 22") mit unterschiedlichen Polarisationszuständen (s, p) erzeugt.

13. Bearbeitungsoptik nach Anspruch 12, welche mindestens ein doppelbrechendes Polarisator-Element (1a, 1b) zur Erzeugung eines lateralen Versatzes (Δx) und/oder eines Winkelversatzes (Δα) zwischen zwei Teilstrahlen (22, 22', 22") mit unterschiedlichen Polarisationszuständen (s, p) aufweist.

14. Bearbeitungsoptik nach Anspruch 12 oder 13, **dadurch gekennzeichnet, dass** das mindestens eine doppelbrechende Polarisator-Element zur Erzeugung des longitudinalen Versatzes (Δz) zwischen zwei Teilstrahlen (22, 22', 22") mit unterschiedlichen Polarisationszuständen (s, p) ein doppelbrechendes Linsen-Element (6) ist.

15. Laserbearbeitungsvorrichtung (13), umfassend:
eine Bearbeitungsoptik (10) nach einem der Ansprüche 12 bis 14, sowie eine Laserquelle, insbesondere eine Ultrakurzpuls-Laserquelle (11), zur Erzeugung eines Laserstrahls (12), insbesondere zur Erzeugung eines Laserstrahls (12) mit einem Gauß-förmigen Strahlprofil.

## Claims

1. A method for laser processing a workpiece (23, 23', 23", 59, 101, 107), comprising:
splitting a preferably pulsed laser beam (12, 3) into a plurality of partial beams (22, 22', 22", 5a, 5b), each having one of two different polarization states (s, p),
processing the workpiece (23, 23', 23", 59, 101, 107) by focusing the plurality of partial beams (22, 22', 22") in a plurality of at least partially overlapping partial regions (25A, 25A', 25A", 59A) of a continuous interaction region (25, 59, 103, 109), wherein partial beams (22, 22', 22") with respectively different polarization states (s, p) are focused into adjacent partial regions (25A, 25A', 25A", 59A) of the continuous interaction region (25, 59, 103, 109),
**characterized in that** at least two partial regions (25A', 59A) of the continuous interaction region (25, 59, 103, 109) are offset relative to one another in the longitudinal direction (Z), i.e. in the propagation direction of the partial beams (22, 22', 22"), wherein a longitudinal offset (Δz) between two partial beams (22, 22', 22", 5a, 5b) with different polarization states (s, p) is generated when the laser beam (3) is split at at least one birefringent lens element (6).

2. The method according to claim 1, in which the laser beam (3) passes through a preferably diffractive beam-splitter optic (9) and at least one preferably birefringent polarizer element (6, 1a) when being split into the plurality of partial beams (22, 22', 22", 5a, 5b).

3. The method according to claim 1 or 2, in which, when the laser beam (3) is split at at least one birefringent polarizer element (1a, 1b), a lateral offset (Δx) and/or an angular offset (Δα) between two partial beams (22, 22', 22", 5a, 5b) with different polarization states (s, p) is generated, which preferably focuses into adjacent partial regions (25A, 25A', 25A", 59A) of the continuous interaction region (25, 59, 103, 109).

4. The method according to any one of the preceding claims, in which the longitudinal offset (Δz) between two partial beams (22, 22', 22", 5a, 5b) with different polarization states (s, p) is generated in such a way, that these are focused into adjacent partial regions (25A, 25A', 25A", 59A) of the continuous interaction region (25, 59, 103, 109).

5. The method according to any one of the preceding claims, wherein the partial regions (25A', 59A) of the continuous interaction region (25, 59, 103, 109) have an additional offset in the lateral direction (Δx).

6. The method according to any one of the preceding claims, wherein the continuous interaction region (25, 59, 103, 109) has a curved contour, which extends in particular in the longitudinal direction (Z), and/or wherein the continuous interaction region (25, 59, 103, 109) does not lie in one plane.

7. The method according to any one of the preceding claims, in which the continuous interaction region (25, 59, 103, 109) and the workpiece (3, 59, 101, 107) are moved relative to one another during the laser processing, wherein the movement preferably takes place along a feed direction (27, 105B, 105B').

8. The method according to any one of the preceding claims, in which the interaction region forms an ablation region (25, 103, 109) for the removal of material from the workpiece (23, 23', 101, 107).

9. The method according to claim 8, in which the ablation region (25, 103) is formed on an entry-side surface (23A, 102) of the workpiece (23, 23', 101) or on an exit-side surface (108) of the workpiece (107), wherein preferably a predetermined, in particular three-dimensional, surface form (102B, 108B) is generated on the entry-side or on the exit-side surface (102, 108) during processing.

10. The method according to one of claims 1 to 7, in which the interaction region forms a modification region (25, 59) for structurally modifying a material of the workpiece (23", 59), wherein the workpiece (23", 59) preferably consists of a material that is transparent to the laser beam (3), in particular glass.

11. The method according to claim 10, in which the workpiece (23", 59) is separated after the structural modification along a modification structure (33, 61) formed during the laser processing in the volume of the workpiece (23", 59), wherein the separation preferably takes place by way of a mechanical separation process, a thermal separation process, or by way of an etching process.

12. A processing optic (10) for laser processing of a workpiece (23, 59, 101, 107), comprising:
a preferably diffractive beam-splitter optic (9) and at least one birefringent polarizer element (6, 1a, 1b) for splitting a preferably pulsed laser beam (12, 3) into a plurality of partial beams (22, 22', 22", 5a, 5b), each having one of two different polarization states (s, p),
a focusing optic (6, 7) for focusing the plurality of partial beams (22, 22', 22") in a plurality of at least partially overlapping partial regions (25A, 25A', 25A", 59A) of a continuous interaction region (25, 59, 103, 109), wherein the processing optic (10) is designed to focus partial beams (22, 22', 22", 5a, 5b) with respectively different polarization states (s, p) into adjacent partial regions (25A, 25A', 25A", 59A) of the continuous interaction region (25, 59, 103, 109),
**characterized in that** the at least one birefringent polarizer element (6) generates a longitudinal offset (Δz), i.e. in the propagation direction of the partial beams (22, 22', 22"), between two partial beams (22, 22', 22") with different polarization states (s, p).

13. The processing optic according to claim 12, which has at least one birefringent polarizer element (1a, 1b) for generating a lateral offset (Δx) and/or an angular offset (Δα) between two partial beams (22, 22', 22") with different polarization states (s, p).

14. The processing optic according to claim 12 or 13, **characterized in that** the at least one birefringent polarizer element for generating the longitudinal offset (Δz) between two partial beams (22, 22', 22") with different polarization states (s, p) is a birefringent lens element (6).

15. A laser processing device (13), comprising:
a processing optic (10) according to one of claims 12 to 14, and a laser source, in particular an ultra-short-pulse laser source (11) for generating a laser beam (12), in particular for generating a laser beam (12) with a Gaussian beam profile.

## Revendications

1. Procédé d'usinage au laser d'une pièce (23, 23', 23", 59, 101, 107), comprenant :
la division d'un faisceau laser (12, 3) de préférence pulsé en une pluralité de faisceaux partiels (22, 22', 22", 5a, 5b) qui présentent chacun l'un de deux états de polarisation différents (s, p),
l'usinage de la pièce (23, 23', 23", 59, 101, 107) par focalisation de la pluralité de faisceaux partiels (22, 22', 22") dans une pluralité de zones partielles (25A, 25A', 25A", 59A) se chevauchant au moins partiellement d'une zone d'interaction continue (25, 59, 103, 109), dans lequel des faisceaux partiels (22, 22', 22") avec chacun des états de polarisation différents (s, p) sont focalisés dans des zones partielles adjacentes (25A, 25A', 25A", 59A) de la zone d'interaction continue (25, 59, 103, 109),
**caractérisé en ce qu'**au moins deux zones partielles (25A', 59A) de la zone d'interaction continue (25, 59, 103, 109) sont décalées les unes par rapport aux autres dans la direction longitudinale (Z), c'est-à-dire dans la direction de propagation des faisceaux partiels (22, 22', 22"), dans lequel, lors de la division du faisceau laser (3) sur au moins un élément de lentille biréfringent (6), un décalage longitudinal (Δz) est généré entre deux faisceaux partiels (22, 22', 22", 5a, 5b) ayant des états de polarisation différents (s, p).

2. Procédé selon la revendication 1, dans lequel le faisceau laser (3), lors de sa division en une pluralité de faisceaux partiels (22, 22', 22", 5a, 5b), traverse une optique de séparation de faisceau (9) de préférence diffractive et au moins un élément polariseur, de préférence biréfringent (6, 1a).

3. Procédé selon la revendication 1 ou 2, dans lequel, lors de la division du faisceau laser (3) sur au moins un élément polariseur biréfringent (1a, 1b), un décalage latéral (Δx) et/ou un décalage angulaire (Δα) sont générés entre deux faisceaux partiels (22, 22', 22", 5a, 5b) ayant des états de polarisation différents (s, p), lesquels sont de préférence focalisés dans des zones partielles adjacentes (25A, 25A', 25A", 59A) de la zone d'interaction continue (25, 59, 103, 109).

4. Procédé selon l'une quelconque des revendications précédentes, dans lequel le décalage longitudinal (Δz) entre deux faisceaux partiels (22, 22', 22", 5a, 5b) ayant des états de polarisation différents (s, p) est généré de telle sorte que ceux-ci sont focalisés dans des zones partielles adjacentes (25A, 25A', 25A", 59A) de la zone d'interaction continue (25, 59, 103, 109).

5. Procédé selon l'une quelconque des revendications précédentes, dans lequel les zones partielles (25A', 59A) de la zone d'interaction continue (25, 59, 103, 109) présentent un décalage supplémentaire dans la direction latérale (Δx).

6. Procédé selon l'une quelconque des revendications précédentes, dans lequel la zone d'interaction continue (25, 59, 103, 109) présente un contour courbe qui s'étend en particulier dans la direction longitudinale (Z), et/ou dans lequel la zone d'interaction continue (25, 59, 103, 109) ne se trouve pas dans un plan.

7. Procédé selon l'une quelconque des revendications précédentes, dans lequel, lors de l'usinage au laser, la zone d'interaction continue (25, 59, 103, 109) et la pièce (3, 59, 101, 107) sont déplacés l'un par rapport à l'autre, dans lequel le mouvement s'effectue de préférence le long d'une direction d'avance (27, 105B, 105B').

8. Procédé selon l'une quelconque des revendications précédentes, dans lequel la zone d'interaction forme une zone d'ablation (25, 103, 109) pour enlever de la matière de la pièce (23, 23', 101, 107).

9. Procédé selon la revendication 8, dans lequel la zone d'ablation (25, 103) est formée sur une surface d'entrée (23A, 102) de la pièce (23, 23', 101) ou sur une surface de sortie (108) de la pièce (107), dans lequel, lors de l'usinage au laser, une forme de surface (102B, 108B) prédéfinie, en particulier tridimensionnelle, est de préférence générée sur la surface d'entrée ou de sortie (102, 108).

10. Procédé selon l'une quelconque des revendications 1 à 7, dans lequel la zone d'interaction forme une zone de modification (25, 59) pour la modification structurelle d'une matière de la pièce (23", 59), dans lequel la pièce (23", 59) est de préférence constituée d'une matière transparente au faisceau laser (3), en particulier du verre.

11. Procédé selon la revendication 10, dans lequel la pièce (23", 59) est séparée après la modification structurelle le long d'un contour de modification (33, 61) formé dans le volume de la pièce (23", 59) lors de l'usinage au laser, dans lequel la séparation est de préférence effectuée par un processus de séparation mécanique, un processus de séparation thermique ou un processus de gravure.

12. Optique d'usinage (10) pour l'usinage au laser d'une pièce (23, 59, 101, 107), comprenant :
une optique de séparation de faisceau (9) de préférence diffractive et au moins un élément polariseur biréfringent (6, 1a, 1b) pour la division d'un faisceau laser (12, 3) de préférence pulsé en une pluralité de faisceaux partiels (22, 22', 22", 5a, 5b) qui présentent chacun l'un de deux états de polarisation différents (s, p),
une optique de focalisation (6, 7) pour focaliser la pluralité de faisceaux partiels (22, 22', 22") dans une pluralité de zones partielles (25A, 25A', 25A", 59A) se chevauchant au moins partiellement d'une zone d'interaction continue (25, 59, 103, 109), dans lequel l'optique d'usinage (10) est conçue pour focaliser des faisceaux partiels (22, 22', 22", 5a, 5b) ayant chacun des états de polarisation différents (s, p) sont focalisés dans des zones partielles adjacentes (25A, 25A', 25A", 59A) de la zone d'interaction continue (25, 59, 103, 109),
**caractérisé en ce que** l'au moins un élément polariseur biréfringent (6) génère un décalage longitudinal (Δz), c'est-à-dire dans la direction de propagation des faisceaux partiels (22, 22', 22") , entre deux faisceaux partiels (22, 22', 22") ayant des états de polarisation différents (s, p).

13. Optique d'usinage selon la revendication 12, laquelle présente au moins un élément polariseur biréfringent (1a, 1b) pour générer un décalage latéral (Δx) et/ou un décalage angulaire (Δα) entre deux faisceaux partiels (22, 22', 22") ayant des états de polarisation différents (s, p).

14. Optique d'usinage selon la revendication 12 ou 13, **caractérisée en ce que** l'au moins un élément polariseur biréfringent pour générer le décalage longitudinal (Δz) entre deux faisceaux partiels (22, 22', 22") ayant des états de polarisation différents (s, p) est un élément de lentille biréfringent (6).

15. Dispositif d'usinage au laser (13), comprenant :
une optique d'usinage (10) selon l'une quelconque des revendications 12 à 14, ainsi qu'une source laser, en particulier une source laser (11) à impulsions ultracourtes, pour générer un faisceau laser (12), en particulier pour générer un faisceau laser (12) à profil de faisceau gaussien.
